# EUROPÄISCHE PATENTSCHRIFT

(11) **EP 4 491 570 B1**
(45) Veröffentlichungstag und Bekanntmachung des Hinweises auf die Patenterteilung: **17.12.2025**
(21) Anmeldenummer: 23184583.5
(22) Anmeldetag: 11.07.2023
(51) Int. Cl.: C01B 25/10

(54) **VERFAHREN ZUR HERSTELLUNG VON PHOSPHOROXYCHLORID AUS PHOSPHOR- SAUERSTOFFVERBINDUNGS-HALTIGEM MATERIAL**
PROCESS FOR THE PRODUCTION OF PHOSPHORUS OXICHLORIDE FROM MATERIAL CONTAINING PHOSPHORUS-OXYGEN COMPOUNDS
PROCÉDÉ DE FABRICATION D'OXYCHLORURE DE PHOSPHORE À PARTIR D'UN MATÉRIAU CONTENANT DES COMPOSÉS OXYGÉNÉS DU PHOSPHORE

(43) Veröffentlichungstag der Anmeldung: 15.01.2025
(73) Patentinhaber: LANXESS Deutschland GmbH, 50569 Köln (DE)
(72) Erfinder: BOLL, Matthias, 51061 Köln (DE)

(56) Entgegenhaltungen:
- US-A- 1 606 319
- US-A- 1 730 521
- US-A- 3 927 179
- XIAOJIANG WANG ET AL: "Effect of pyrophosphate on the dechlorination of tetrachloroethene by the Fenton reaction", ENVIRONMENTAL TOXICOLOGY AND CHEMISTRY, PERGAMON PRESS, US, vol. 17, no. 9, 2 November 2009 (2009-11-02), pages 1689 - 1694, XP071660917, ISSN: 0730-7268, DOI: 10.1002/ETC.5620170907

## Beschreibung

Die Erfindung betrifft ein Verfahren, Phosphor-Sauerstoffverbindungs-haltiges Material in Phosphorylchlorid zu überführen. Diese können dann einer technischen Verwendung zugeführt werden kann.

Der Aufschluss von, vor allem wasserunlöslichen, Phosphaten mit dem Ziel, die enthaltende Phosphorverbindung in seiner Form technisch und wirtschaftlich zu nutzen oder quantitativ zu bestimmen, spielt in der Analytik und der Technik eine große Rolle. In der Analytik dient er zur Bestimmung von Phosphor in Gesteinen oder Erzen. Calciumphosphatquellen werden technisch in riesigen Mengen mit Schwefelsäure umgesetzt, um wasserlösliche Phosphorsäure zu gewinnen, die im Wesentlichen als Dünger oder Waschmittelzuschlag, untergeordnet als Säuerungsmittel zum Beispiel in der Lebensmittelindustrie, Verwendung findet.

Die Phosphatgewinnung/Phosphorsäuregewinnung wird technisch durch das Senken des pH-Wertes in einer wässrigen Aufschlämmung von gemahlenem Phosphatgestein, bevorzugt durch Mineralsäuren wie Schwefelsäure oder Phosphorsäure, gefolgt von einer Filtration, durchgeführt. Nachteilig an diesem Verfahren ist, dass es sehr große Mengen Säure benötigt und ein technisch schwer zu beherrschender Filtrationsschritt mit entsprechenden Nebenprodukten zwingend erforderlich ist. Auch werden so große Mengen Abfälle erzeugt.

Diese Umsetzungen führen aber nicht zu den gewünschten Phosphor-Chlor-Verbindungen.

Die Herstellung von Phosphor-Chlor-Verbindungen erfolgt in technischem Maßstab ausschließlich über den energieintensiven und umständlichen Umweg über die Synthese von elementarem Phosphor mit der nachfolgenden Umsetzung mit elementarem Chlor.

Die Gewinnung von Phosphor-Chlor-Verbindungen geschieht in technischem Maßstab im allgemeinen über den Weg des elementaren Phosphors, hergestellt aus Phosphatgestein, Kohle sowie Zuschlagsstoffen im Lichtbogenofen und der darauffolgenden Verbrennung des Phosphors mit Chlor zu Phosphor-Chlor-Verbindungen. Nachteilig hier ist der sehr hohe Stromverbrauch, die hohen Temperaturen, der Umgang mit giftigem weißem Phosphor, die enthaltenen Arsenverbindungen, der Umgang mit giftigem Chlor und die immensen Mengen an Schlacke, die entsorgt werden müssen sowie der sehr große CO₂-Fußabdruck.

Auf diese Weise sind allerdings nur Phosphorchloride wie PCl₃ zugängig. Das Phosphoroxychlorid POCl₃ ist auf diesem Weg nicht erhältlich, sondern muss erst in einem weiteren Schritt durch Oxidation aus PCl₃ erzeugt werden.

Aus US1606319A ist ein Verfahren zur Herstellung von Phosphorylchlorid ausgehend von Phosgen und einem Calciumphosphat bei etwa 500°C beschrieben.

In US 1730521A wird die Herstllung von Phosphor-Chlor-Verbindungen (POCl₃; PCl₅) ausgehend von Caliumtriphosphat, Silica, Kohlenstoff und Chlorgas offenbart.

In US3927179A wird ein kontiuniertliches Verfahren zur Herstellung von Phosphorylchlorid, umfassend die Schritte: a) Bereitstellen von flüssigem Phosphortrichlorid in einer ersten Reaktionszone; b. Einführen von Phosphor und Luft in die erste Reaktionszone zur Bildung von Phosphorpentoxid in Gegenwart des Phosphortrichlorids; und c. Leiten des Phosphorpentoxid- und Phosphortrichlorid-Gemisches aus der ersten Reaktionszone in eine zweite Reaktionszone und Umsetzen des Gemiscvhes mit in die zweite Reaktionszone eingespeistem Chlor zur Bildung von Phosphoroxychlorid.

Aus Xiaojiang Wang et al. "Effect of pyrophosphate in the dichlorination of tetrachlorethene by Fenton reaction" in Environmental Toxicology and Chemistry, Peramon Press, US, Bd. 17, Nr. 9, 2. November 2009, Seiten 1689-1694 wird die Fähigkeit von Pyrophosphat beschrieben, Fe in Lösung zu halten und damit die Dechlorierung von Tetrachlorethen durch Fenton die Fenton Reaktion zu verbessern.

Ein Verfahren zur direkten Gewinnung von Phosphor-Chlor-Verbindungen aus Phosphaten als flüchtige Verbindung ist die Verwendung von Tetrachlorkohlenstoff, teilweise in Kombination mit Chlor und/oder mit Inertgasen wie Kohlendioxid. Die Probe wird dabei auf 700°C bis 900°C erhitzt und der Gasstrom darüber geleitet. Der Gasstrom wird anschließend in einen Wäscher geleitet und dort auf Phosphat untersucht. Es wird von einem quantitativen Umsatz berichtet und das Verfahren wurde an zahlreichen Metallphosphaten getestet (Jannasch, P., Jilke, W.; Journal für praktische Chemie, 21, 1908 und Jannasch P., Jilke, W.; Journal für praktische Chemie, 113, 1909).

Nachteilig an diesem Verfahren sind die beschriebenen langen Reaktionszeiten. Vor allem aber ist die Verwendung von Tetrachlorkohlenstoff in technischen Verfahren mittlerweile verboten worden, weil die Verbindung die Ozonschicht schädigt, sodass diese Reaktion technisch nicht durchgeführt werden kann.

### Aufgabe

Aufgabe der vorliegenden Erfindung war es daher, ein Verfahren zur Herstellung von Phosphoroxychlorid zu finden, das die beschriebenen Nachteile des Standes der Technik nicht mehr aufweist. Überraschend wurde ein Verfahren zur Herstellung von Phosphoroxychlorid, gefunden, das dadurch gekennzeichnet ist, dass man
i. ein Phosphor-Sauerstoffverbindungs-haltiges Material aus der Gruppe der Calciumphosphate in Gegenwart von Tetrachlorethen bei einer Temperatur von 500 bis 1000°C, bevorzugt von 600 bis 900°C, insbesondere von 700 bis 850°C umsetzt und
ii. das gebildete Phosphoroxychlorid, im Abgasstrom ableitet und isoliert.

### Phosphor-Sauerstoffverbindungen

Bevorzugt enthält das Phosphor-Sauerstoffverbindungs-haltige Material aus der Gruppe der Calciumphosphate die entsprechenden Orthophosphate oder Metaphosphate oder Polyphosphate oder Mischungen davon. Besonders bevorzugt enthält es Calciumphosphat, besonders bevorzugt Calcium-Orthophosphat oder Calciumhydroxylapatite.

Das Phosphor-Sauerstoffverbindungs-haltige Material aus der Gruppe der Calciumphosphate enthält vorzugsweise einem Gehalt, berechnet als elementarer Phosphor von 1 bis 44 Gew.-%, vorzugsweise von 1 bis 30 Gew.-%, insbesondere von 5 bis 28 Gew.-%, bezogen auf das Phosphor-Sauerstoffverbindungs-haltige Material.

Die eingesetzte Phosphor-Sauerstoffverbindung aus der Gruppe der Calciumphosphate hat vorzugsweise eine mittlere Teilchengröße von 0,1 µm bis 50 mm, vorzugsweise von 0,5 bis 10 mm. Die Teilchengröße kann je nach Dimension einfach über eine Siebung bestimmt werden oder für kleinere Teilchen über die Methode der Laserbeugung respektive Laserstreuung. Die jeweils am besten einzusetzende Methode ist dem Fachmann bekannt.

Der Wassergehalt der eingesetzten Phosphor-Sauerstoffverbindung aus der Gruppe der Calciumphosphate beträgt bevorzugt weniger als 5 Gew.-%, insbesondere weniger als 1 Gew.-% betragen.

### Verfahren

Die Umsetzung des Phosphor-Sauerstoffverbindungs-haltigen Materials aus der Gruppe der Calciumphosphate erfolgt in Gegenwart von Tetrachlorethen. Dieses kann als solches eingesetzt werden oder in Form seines Vorläufers Chloroform, welches ab einer Temperatur von 500°C HCl abspaltet und sich in Tetrachlorethen umwandelt, oder in Form einer Mischungen enthaltend Tetrachlorethen und Chloroform.

Da die thermische Umwandlung von Chloroform in Tetrachlorethen mit der Bildung von HCl einhergeht, das für die weitere Umsetzung mit Phosphor-Sauerstoff-Verbindungen nutzlos ist, wird bevorzugt Tetrachlorethen als Edukt verwendet, sofern die Verfügbarkeit gegeben ist.

Optional ist die Umsetzung zudem in Gegenwart eines Inertgases. Als Inertgas kommt beispielsweise Stickstoff, Kohlendioxid und/oder Argon in Frage. Bevorzugt enthält das Tetrachlorethen, das ggf. zusammen mit Chloroform und ggf. einem Trägergas eingesetzt wird, bezogen auf die Summe des diese Komponenten enthaltenden Gasstroms, einen Sauerstoffgehalt von weniger als 0,1, insbesondere weniger als 0,05 Volumenprozent. Bei dem bevorzugt verwendeten Inertgas handelt es sich bevorzugt um Stickstoff, Kohlendioxid oder Argon.

Bevorzugt verwendet man ein Gewichtsverhältnis von der Summe von Tetrachlorethen und/oder Chloroform zu Inertgas von 1:0 bis 1:6, bevorzugt zwischen 1:0 und 1:4.

Die Umsetzung des Phosphor-Sauerstoffverbindungs-haltigen Materials aus der Gruppe der Calciumphosphate wird vorzugsweise in einem Wirbelbett-, Schüttbett- oder Fließbettreaktor, in einem Schachtofen oder in einem Ofen erfolgen, wie er am einfachsten als indirekt beheizter Rohrofen oder Drehrohrofen konzipiert werden kann. Die jeweiligen Reaktoren sind vorzugsweise gasdicht. Optional kann man vor der Einbringung des Materials in einen Ofen das Material auch in eine Form bringen, zum Beispiel durch Brikettieren, Extrudieren oder Pelletieren. Hierfür können Hilfshilfsmittel wie Schichtsilikate insbesondere Bentonite sowie Ligninsulfonat, Methylcellulose, Wasserglas, Stärke oder andere verwendet werden.

Das nach dem erfindungsgemäßen Verfahren einzusetzende Phosphor-Sauerstoffverbindungs-haltige Material aus der Gruppe der Calciumphosphate wird vorzugsweise in einen Reaktor gegeben, der vorzugsweise mit einer unter den einzustellenden Reaktionsbedingungen resistenten Schicht versehen ist. Bevorzugte Reaktormaterialien sind mit Nickel oder Grafit beschichtete Reaktoren. Besonders bevorzugt sind Reaktoren, die eine Bewegung des Materials während der Reaktion erlauben, um eine möglichst effektive Kontaktaufnahme der Edukte und Wärmeverteilung zu erlauben. Dabei sind Wirbelbettvorrichtungen, sowie Drehrohrreaktoren oder eine Reaktion in einer Extrudervorrichtung mit Schneckenvortrieb bevorzugt.

Im Falle eines Rohrreaktors beträgt die Reaktorlänge vorzugsweise 0,2 bis 40 m. Die Verweilzeit im Reaktor während der Reaktion richtet sich in der Regel nach Temperatur und Kontaktmöglichkeit der Edukte zueinander. Das erfindungsgemäße Verfahren kann als Batch oder kontinuierlich betrieben werden.

Durch den Reaktor und über die Phosphor-Sauerstoffverbindungen aus der Gruppe der Calciumphosphate wird vorzugsweise ein Gasstrom von Tetrachlorethen und/oder Chloroform geleitet, ggf. verdünnt durch einen inerten Trägergasstrom, während gleichzeitig die Temperatur der Reaktion bei 500 und 1000°C, bevorzugt bei 600 bis 900°C, insbesondere bei 700 bis 850°C gehalten wird. Der Zeitraum der Reaktion kann zwischen wenigen Minuten bis zu 10 Stunden betragen, bevorzugt zwischen 20 Minuten und 5 Stunden.

Bevorzugt wird je mol Phosphor der Phosphor-Sauerstoffverbindungs-haltigen Materials 0,75 bis 4 mol Tetrachlorethen oder 1 bis 4,5 mol Chloroform verwendet.

Die bei der Reaktion entstehenden, bei der Reaktionstemperatur ggf. flüchtigen Produkte, in diesen Beispielen vor allem Phosphorylchlorid, Eisenchlorid, aber auch Aluminiumchlorid und ggf. weitere Schwermetallchloride wie Zinkchlorid oder Chloride der Gruppe der Seltenen Erden, werden bevorzugt an unterschiedlich kühlen Stellen aus dem Abgasstrom resublimiert und getrennt gesammelt.

Bevorzugte Abscheidetemperaturen sind für FeCl₂ kleiner als 701°C, insbesondere kleiner 700°C bis 307°C, für FeCl₃ kleiner gleich 307°C, insbesondere 150°C bis 300°C und für AlCl₃ kleiner gleich 150°C, insbesondere 110°C bis 149.

Phosphorylchlorid wird bevorzugt in einem Kondensator bei vorzugsweise weniger als 110°C gesammelt.

Sowohl das Sublimat als auch der Rückstand sind im Wesentlichen wasserlöslich und können bevorzugt aus ihren wässrigen Lösungen weiter getrennt und isoliert werden, zum Beispiel nach Ermittlung ihrer möglichen Existenz nach dem klassischen H₂S-Trennungsgang voneinander in Form ihre Sulfide, Chloride, Phosphate, Fluoride oder sonstigen Fällungsverbindungen getrennt und isoliert werden.

### Beispiele

### Analytik

Die Analytik wurde, nach Auflösen der eingesetzten Calciumphosphat-Probe in geeigneten Säuren, in einem ICP-OES untersucht, nach Kalibrierung für das jeweilige Element durch kalibrierte Standardlösungen der jeweiligen Elemente.

### Beispiel 1

10g eines Calciumphosphats technischer Qualität (erhalten aus einer Klärschlammaschenaufarbeitung) enthaltend (in Gew.-%:) Ca: 35%, PO₄: 52%, Fe: 0,14%, Al: 0,48%, jeweils bestimmt per ICP-OES, werden in einen Quarzreaktor (120mm Durchmesser), der in einem Röhrenofen eingelegt ist, eingebracht. Der Reaktor wird auf 150°C erwärmt.

0,2ml/min Tetrachlorethen werden in einem Totalverdampfer verdampft und mit einem Stickstoffstrom von 1 I/min bei 150°C vermischt. Das Gemisch Tetrachlorethen und Stickstoff tritt in den, um eine Kondensation des Eduktes zu vermeiden auf 150°C erwärmten, Quarzreaktor ein und streicht über das Calciumphosphat. Die gasförmigen Reaktionsprodukte verlassen den Reaktor als Abgasstrom, der auf 100°C gekühlt und durch eine Gaszelle mit optischen Fenstern geleitet wird, durch die ein Infrarotspektrum der Gasphase aufgenommen wird. Die Beheizung in dieser Phase der Reaktion dient ausschließlich dazu, die Kondensation von Edukten und Produkten zu vermeiden.

Der Feststoff wird so im Reaktor und Gasstrom innerhalb von 2h auf 780°C aufgeheizt, während der verlassende Abgasstrom kontinuierlich durch die Aufnahme von IR-Spektren beobachtet wird.

Auch das Aufheizen der Probe vor der Zugabe von Tetrachlorethen auf 780°C ist möglich.

Ab einer Temperatur von 750°C beginnt die Umsetzung zu POCl₃ zügig zu werden, das durch die Banden im IR (beobachtet: 592cm⁻¹ (P-Cl), 1322cm⁻¹ (P=O), Literatur: 590cm⁻¹ und 1322 cm⁻¹ (±6cm⁻¹), Shimanouchi, T., Tables of Molecular Vibrational Frequencies Consolidated Volume II, J. Phys. Chem. Ref. Data, 1972, 6, 3, 993-1102.) belegt wird.

Das POCl₃ wird in einem Kondensator gesammelt.

Es werden nach Ende der Reaktion auch 13,2 g eines durch anhaftende Rußspuren schwarz gefärbten Feststoffs erhalten, der im Wesentlichen aus CaCl₂ besteht und teilweise geschmolzen ist. Dieses feste Reaktionsprodukt kann in Wasser gelöst werden und einer weiteren Verwendung, wie etwa zur Phosphatfällung in Kläranlagen, zugeführt werden.

### Beispiel 2

50g eines Calciumphosphats technischer Qualität (erhalten aus einer Klärschlammaschenaufarbeitung) enthaltend (in Gew.-%) Ca: 35%, PO₄: 52%, Fe: 0,14%, Al: 0,48%, jeweils bestimmt per ICP-OES, werden in einen Quarzreaktor (120mm Durchmesser), der in einem Röhrenofen eingelegt ist, eingebracht. Der Reaktor wird auf 150°C erwärmt.

0,2ml/min Chloroform werden in einem Totalverdampfer verdampft und mit einem Stickstoffstrom von 1 l/min bei 100°C vermischt. Das Gemisch Chloroform und Stickstoff tritt in den, um eine Kondensation des Eduktes zu vermeiden auf 150°C erwärmten, Quarzreaktor ein und streicht über das Calciumphosphat. Die gasförmigen Reaktionsprodukte verlassen den Reaktor, werden auf 100°C gekühlt und werden durch eine Gaszelle mit optischen Fenstern geleitet, durch die ein Infrarotspektrum der Gasphase aufgenommen wird. Die Beheizung in dieser Phase der Reaktion dient ausschließlich dazu, die Kondensation von Edukten und Produkten zu vermeiden.

Der Feststoff wird so im Reaktor und Gasstrom innerhalb von 2h auf 780°C aufgeheizt, während der verlassende Abgasstrom kontinuierlich durch die Aufnahme von IR-Spektren beobachtet wird.

Auch das Aufheizen der Probe vor der Zugabe von Chloroform auf 780°C ist möglich.

Ab einer Temperatur von 500°C zersetzt sich das Chloroform in HCl und Tetrachlorethen.

Ab einer Temperatur von 600°C reagiert das gebildete Tetrachlorethen mit dem vorgelegten Calciumphosphat immer schneller zu Calciumchlorid und Phosphorylchlorid. Das POCl₃ wird in einem Kondensator gesammelt. Letzteres ist im Infrarotspektrum an charakteristischen Banden zu erkennen. Ab 750°C erreicht die Reaktion eine Geschwindigkeit, mit der signifikante Umsatzraten erreicht werden. 20 Minuten nach Erreichen der Zieltemperatur von 780°C wird die Reaktion beendet.

## Patentansprüche

1. Verfahren zur Herstellung von Phosphoroxychlorid **dadurch gekennzeichnet, dass** man
i. ein Phosphor-Sauerstoffverbindungs-haltiges Material aus der Gruppe der Calciumphosphate in Gegenwart von Tetrachlorethen bei einer Temperatur von 500 bis 1000°C umsetzt und
ii. das gebildete Phosphoroxychlorid, im Abgasstrom ableitet und isoliert.

2. Verfahren zur Herstellung von Phosphoroxychlorid gemäß Anspruch 1, **dadurch gekennzeichnet, dass** die Umsetzung bei einer Temperatur von 600 bis 900°C, insbesondere bei 700 bis 850°C erfolgt.

3. Verfahren zur Herstellung von Phosphoroxychlorid gemäß wenigstens einem der Ansprüche 1 bis 2, **dadurch gekennzeichnet, dass** das Phosphor-Sauerstoffverbindungs-haltige Material wenigstens ein Orthophosphate oder Metaphosphate oder Polyphosphate oder deren Mischungen enthält.

4. Verfahren zur Herstellung von Phosphoroxychlorid gemäß wenigstens einem der Ansprüche 1 bis 3, **dadurch gekennzeichnet, dass** das Phosphor-Sauerstoffverbindungs-haltige Material aus der Gruppe der Calciumphosphate Calcium-Orthophosphat und/oder Calciumhydroxylapatite enthält.

5. Verfahren zur Herstellung von Phosphoroxychlorid gemäß wenigstens einem der Ansprüche 1 bis 4, **dadurch gekennzeichnet, dass** das Phosphor-Sauerstoffverbindungs-haltige Material aus der Gruppe der Calciumphosphate wenigstens einen Gehalt, berechnet als elementarer Phosphor, von 1 bis 44 Gew.-%, vorzugsweise von 1 bis 30 Gew.-% insbesondere von 5 bis 28 Gew.-%, bezogen auf das Phosphor-Sauerstoffverbindungs-haltige Material enthält.

6. Verfahren zur Herstellung von Phosphoroxychlorid gemäß wenigstens einem der Ansprüche 1 bis 5, **dadurch gekennzeichnet, dass** das Phosphor-Sauerstoffverbindungs-haltige Material aus der Gruppe der Calciumphosphate eine mittlere Teilchengröße von 0,1 µm bis 50 mm, vorzugsweise von 0,5 bis 10 mm besitzt.

7. Verfahren zur Herstellung von Phosphoroxychloridgemäß wenigstens einem der Ansprüche 1 bis 6, **dadurch gekennzeichnet, dass** für die Umsetzung des Phosphor-Sauerstoffverbindungs-haltigen Materials aus der Gruppe der Calciumphosphate Tetrachlorethen und/oder Chloroform ggf. mit einem Inertgas eingesetzt wird.

8. Verfahren zur Herstellung von Phosphorylchlorid gemäß wenigstens einem der Ansprüche 1 bis 7, **dadurch gekennzeichnet, dass** Phosphorylchlorid aus dem Abgasstrom abgeleitet und durch Kondensation, vorzugsweise bei weniger als 110°C, abgeschieden wird.

## Claims

1. Process for preparing phosphorus oxychloride, **characterized in that**
i. a phosphorus-oxygen compound-containing material from the group of calcium phosphates is reacted in the presence of tetrachloroethene at a temperature of 500°C to 1000°C and
ii. the formed phosphorus oxychloride is led off in the offgas stream and isolated.

2. Process for preparing phosphorus oxychloride according to Claim 1, **characterized in that** the reaction is performed at a temperature of 600°C to 900°C, in particular at 700°C to 850°C.

3. Process for preparing phosphorus oxychloride according to at least one of Claims 1 to 2, **characterized in that** the phosphorus-oxygen compound-containing material contains at least one orthophosphate or metaphosphate or polyphosphate or mixtures thereof.

4. Process for preparing phosphorus oxychloride according to at least one of Claims 1 to 3, **characterized in that** the phosphorus-oxygen compound-containing material from the group of calcium phosphates contains calcium orthophosphate and/or calcium hydroxylapatite.

5. Process for preparing phosphorus oxychloride according to at least one of Claims 1 to 4, **characterized in that** the phosphorus-oxygen compound-containing material from the group of calcium phosphates contains at least a content, calculated as elemental phosphorus, of 1% to 44% by weight, preferably of 1% to 30% by weight, in particular of 5% to 28% by weight, based on the phosphorus-oxygen compound-containing material.

6. Process for preparing phosphorus oxychloride according to at least one of Claims 1 to 5, **characterized in that** the phosphorus-oxygen compound-containing material from the group of calcium phosphates has an average particle size of 0.1 µm to 50 mm, preferably of 0.5 to 10 mm.

7. Process for preparing phosphorus oxychloride according to at least one of Claims 1 to 6, **characterized in that** tetrachloroethene and/or chloroform optionally with an inert gas is/are used for the reaction of the phosphorus-oxygen compound-containing material from the group of calcium phosphates.

8. Process for preparing phosphoryl chloride according to at least one of Claims 1 to 7, **characterized in that** phosphoryl chloride is led off from the offgas stream and separated out by condensation, preferably at less than 110°C.

## Revendications

1. Procédé de préparation d'oxychlorure de phosphore, **caractérisé en ce qu'**on
i. transforme un matériau contenant une liaison phosphore-oxygène du groupe des phosphates de calcium en présence de tétrachloroéthène à une température de 500 à 1000°C et
ii. évacue et isole l'oxychlorure de phosphore formé dans le flux d'effluents gazeux.

2. Procédé de préparation d'oxychlorure de phosphore selon la revendication 1, **caractérisé en ce que** la transformation a lieu à une température de 600 à 900°C, en particulier à 700 jusqu'à 850°C.

3. Procédé de préparation d'oxychlorure de phosphore selon au moins l'une des revendications 1 à 2, **caractérisé en ce que** le matériau contenant une liaison phosphore-oxygène contient au moins un orthophosphate ou un métaphosphate ou un polyphosphate ou leurs mélanges.

4. Procédé de préparation d'oxychlorure de phosphore selon au moins l'une des revendications 1 à 3, **caractérisé en ce que** le matériau contenant une liaison phosphore-oxygène du groupe des phosphates de calcium contient de l'orthophosphate de calcium et/ou de l'hydroxylapatite de calcium.

5. Procédé de préparation d'oxychlorure de phosphore selon au moins l'une des revendications 1 à 4, **caractérisé en ce que** le matériau contenant une liaison oxygène-phosphore du groupe des phosphates de calcium contient au moins une teneur, calculée sous forme de phosphore élémentaire, de 1 à 44% en poids, de préférence de 1 à 30% en poids, en particulier de 5 à 28% en poids, par rapport au matériau contenant une liaison phosphore-oxygène.

6. Procédé de préparation d'oxychlorure de phosphore selon au moins l'une des revendications 1 à 5, **caractérisé en ce que** le matériau contenant une liaison phosphore-oxygène du groupe des phosphates de calcium présente une grosseur moyenne de particule de 0,1 µm à 50 mm, de préférence de 0,5 à 10 mm.

7. Procédé de préparation d'oxychlorure de phosphore selon au moins l'une des revendications 1 à 6, **caractérisé en ce que**, pour la transformation du matériau contenant une liaison phosphore-oxygène du groupe des phosphates de calcium, on utilise du tétrachloroéthène et/ou du chloroforme, le cas échéant avec un gaz inerte.

8. Procédé de préparation d'oxychlorure de phosphoryle selon au moins l'une des revendications 1 à 7, **caractérisé en ce que** du chlorure de phosphoryle est évacué du flux d'effluents et isolé par condensation, de préférence à moins de 110°C.
